# EUROPEAN PATENT APPLICATION

(11) **EP 4 502 689 A1**
(43) Date of publication of application: **05.02.2025**
(21) Application number: 22933640.9
(22) Date of filing: 05.12.2022
(51) Int. Cl.: G02B 6/44

(54) **OPTICAL FIBER CABLE**

(30) Priority: 24.03.2022 JP 2022048418
(71) Applicant: Fujikura Ltd., Tokyo 135-8512 (JP)
(72) Inventor: KANEKO Soichiro, Sakura-shi, Chiba 285-8550 (JP); UKIYA Noritaka, Sakura-shi, Chiba 285-8550 (JP); OSATO Ken, Sakura-shi, Chiba 285-8550 (JP)
(74) Representative: Plasseraud IP
(86) International application number: PCT/JP2022/044702
(87) International publication number: WO 2023/181510

(57) **Abstract**

An optical fiber cable includes a core including an optical fiber, a first protective layer covering the core, and a second protective layer covering the first protective layer. At least one integrated region fixed to or in pressure contact with the second protective layer and at least one non-integrated region not fixed to and not in pressure contact with the second protective layer are provided on an outer circumferential surface of the first protective layer.

## Description

### [Technical Field]

The present invention relates to an optical fiber cable.

Priority is claimed on Japanese Patent Application No. 2022-048418 filed on March 24, 2022, the contents of which are incorporated herein by reference.

### [Background Art]

Patent Document 1 discloses an optical fiber cable including a core having an optical fiber, an inner sheath covering the core, and an outer sheath covering the inner sheath.

### [Citation List]

### [Patent Document]

[Patent Document 1]
Japanese Unexamined Patent Application, First Publication No. 2017-72801

### [Summary of Invention]

### [PROBLEM TO BE SOLVED BY THE INVENTION]

Generally, the inner sheath and the outer sheath may contract in a longitudinal direction of the optical fiber cable due to an influence of an external environment. Here, for example, if a coefficient of linear expansion of the inner sheath and a coefficient of linear expansion of the outer sheath are different, there is a likelihood that an amount of contraction of the inner sheath and an amount of contraction of the outer sheath when a temperature decreases will be different. Also, even if a tension member is embedded in, for example, only one of the inner sheath and the outer sheath (see, for example, Patent Document 1), there is a likelihood that amounts of contraction of both the sheaths will be different from each other similarly to the above. As described above, if the amounts of contraction of both the sheaths are different from each other, residual stress may be generated inside the optical fiber cable, resulting in an increase in transmission loss.

Here, in order to solve the above-described problem, it is conceivable to employ a configuration in which the inner sheath and the outer sheath are integrated throughout in a circumferential direction (entire circumference). However, in such a configuration, stripping work, in which the outer sheath is pulled out from the optical fiber cable while leaving the inner sheath and the optical fiber in place, becomes difficult to perform, and workability thereof may decrease.

The present invention has been made in consideration of such circumstances, and an objective of the present invention is to provide an optical fiber cable capable of achieving both suppression of transmission loss and improvement in workability of stripping work.

### [MEANS TO SOLVE THE PROBLEM]

In order to solve the above-described problems, an optical fiber cable according to one aspect of the present invention includes a core including an optical fiber, a first protective layer covering the core, and a second protective layer covering the first protective layer, in which at least one integrated region fixed to or in pressure contact with the second protective layer and at least one non-integrated region not fixed to and not in pressure contact with the second protective layer are provided on an outer circumferential surface of the first protective layer.

### [EFFECTS OF THE INVENTION]

According to the above-described aspect of the present invention, it is possible to provide an optical fiber cable capable of achieving both suppression of transmission loss and improvement in workability of stripping work.

### [Brief Description of Drawings]

FIG. 1 is a cross-sectional view illustrating an optical fiber cable according to a first embodiment of the present invention.
FIG. 2 is a cross-sectional view illustrating an optical fiber cable according to a second embodiment of the present invention.
FIG. 3 is a perspective view illustrating an optical fiber cable according to a third embodiment of the present invention.

### [Description of Embodiments]

### (First embodiment)

Hereinafter, an optical fiber cable 1 according to a first embodiment of the present invention will be described on the basis of the drawings.

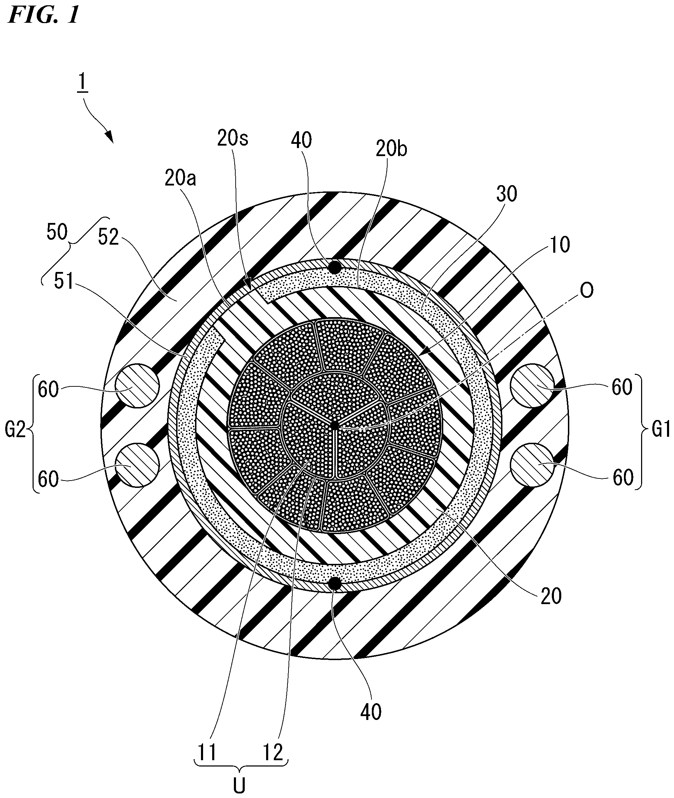

As illustrated in FIG. 1, the optical fiber cable 1 includes a core 10, a first protective layer 20, a pair of rip cords 40, a second protective layer 50, and a plurality of (four in the illustrated example) tension members 60.

The core 10 according to the present embodiment includes a plurality of optical fiber units U. Each of the optical fiber units U includes a plurality of optical fibers 11 and a bundling material 12 for bundling the plurality of optical fibers 11. In other words, inside the core 10, the plurality of optical fibers 11 constitute the optical fiber units U. The core 10 may include a wrapping tape (not illustrated) that covers the plurality of optical fiber units U. Note that, the plurality of optical fibers 11 may not constitute the optical fiber unit U.

### (Definition of directions)

Here, in the present embodiment, a direction parallel to a central axis O of the core 10 is referred to as an axial direction or a longitudinal direction. A cross section perpendicular to the longitudinal direction is referred to as a cross section. In a cross-sectional view, a direction orthogonal to the central axis O is referred to as a radial direction. A direction approaching the central axis O in the radial direction is referred to as a radially inward direction. A direction away from the center axis O in the radial direction is referred to as a radially outward direction. A direction of revolving around the central axis O when viewed from the axial direction is referred to as a circumferential direction.

As the optical fibers 11, it is possible to use optical fiber core wires, optical fiber element wires, optical fiber ribbons, or the like. As a type of the optical fiber ribbon, the plurality of optical fibers 11 may form a so-called intermittently-fixed optical fiber ribbon. In the intermittently-fixed optical fiber ribbon, the plurality of optical fibers 11 are adhered to each other so that they spread in a mesh shape (spider web shape) when they are pulled in a direction orthogonal to an extending direction thereof. More specifically, one optical fiber 11 is adhered to the adjacent optical fibers 11 on both sides at different positions in the extending direction. The adjacent optical fibers 11 are adhered to each other at regular intervals in the extending direction. Note that, a form of the optical fibers 11 included in the core 10 is not limited to the intermittently-fixed optical fiber ribbon, and may be changed as appropriate. Also, the number of optical fibers 11 included in the core 10 may be changed as appropriate as long as it is one or more.

The first protective layer 20 is also referred to as an inner sheath (inside sheath). The first protective layer 20 has a cylindrical shape and covers the core 10 from the outside in the radial direction. As a material of the first protective layer 20, it is possible to use a polyolefin (PO) resin such as polyethylene (PE), polypropylene (PP), an ethylene ethyl acrylate copolymer (EEA), an ethylene vinyl acetate copolymer (EVA), and an ethylene propylene copolymer (EP), polyvinyl chloride (PVC), or the like. Also, the first protective layer 20 may be formed using a mixture (alloy, mixture) of the above-described resins. Also, various additives may be added to the first protective layer 20 according to purposes. Examples of the additives include flame retardants, colorants, deterioration inhibitors, inorganic fillers, and the like.

The second protective layer 50 according to the present embodiment includes a reinforcing member 51 and a sheath 52. The sheath 52 is positioned radially outward of the reinforcing member 51.

The sheath 52 is also referred to as an outer sheath (outside sheath). The sheath 52 has a cylindrical shape and covers the reinforcing member 51 from the outside in the radial direction. As a material of the sheath 52, it is possible to use a polyolefin (PO) resin such as polyethylene (PE), polypropylene (PP), an ethylene ethyl acrylate copolymer (EEA), an ethylene vinyl acetate copolymer (EVA), and an ethylene propylene copolymer (EP), polyvinyl chloride (PVC), or the like. Also, the sheath 52 may be formed using a mixture (alloy, mixture) of the above-described resins. Also, various additives may be added to the sheath 52 according to purposes. Examples of the additives include flame retardants, colorants, deterioration inhibitors, inorganic fillers, and the like. Note that, a material of the first protective layer 20 and a material of the sheath 52 may be the same or different.

The reinforcing member 51 according to the present embodiment has a cylindrical shape and faces the first protective layer 20 in the radial direction. As a material forming the reinforcing member 51, for example, it is possible to use a metal tape. As a material of the metal tape, for example, it is possible to use iron, stainless steel, copper, a copper alloy, or the like. Alternatively, a tape containing glass fibers, a tape containing a fiber-reinforced plastic (FRP), or the like may be used for the reinforcing member 51. The reinforcing member 51 has a role of protecting the optical fiber 11 from bites by animals such as squirrels and woodpeckers, hunting bullets, and the like.

The reinforcing member 51 and the sheath 52 are fixed to each other. Although a manner of fixing is not particularly limited, for example, if the sheath 52 is formed of a resin, it is possible to fix the sheath 52 to the reinforcing member 51 by heat fusion. In this case, in order to more reliably fuse and fix the reinforcing member 51 and the sheath 52, a resin layer may be provided on an outer circumferential surface of the reinforcing member 51.

An outer circumferential surface 20s of the first protective layer 20 includes an integrated region 20a and a non-integrated region 20b. The integrated region 20a is a portion of the outer circumferential surface 20s of the first protective layer 20 that is fused and fixed to an inner circumferential surface of the second protective layer 50 (reinforcing member 51). The non-integrated region 20b is a portion of the outer circumferential surface 20s of the first protective layer 20 that is not fused and fixed to the inner circumferential surface of the second protective layer 50 (reinforcing member 51).

In the present embodiment, a wrapping tape 30 is disposed between the first protective layer 20 and the second protective layer 50 in the radial direction. The wrapping tape 30 according to the present embodiment has water absorption properties. As the wrapping tape 30, for example, it is possible to use a nonwoven fabric, a polyester tape, or the like. The wrapping tape 30 extends in the longitudinal direction. More specifically, the wrapping tape 30 may extend linearly in the longitudinal direction. Alternatively, the wrapping tape 30 may be wound around the first protective layer 20 in a spiral shape or SZ shape.

The wrapping tape 30 according to the present embodiment is curved along the outer circumferential surface 20s of the first protective layer 20 and has a C shape in a cross-sectional view. In other words, the wrapping tape 30 does not extend throughout in the circumferential direction (entire circumference) of the outer circumferential surface 20s of the first protective layer 20. In yet other words, the wrapping tape 30 covers only a part of the outer circumferential surface 20s of the first protective layer 20 in the circumferential direction. Of the outer circumferential surface 20s of the first protective layer 20, a portion covered with the wrapping tape 30 is the non-integrated region 20b described above, and a portion not covered with the wrapping tape 30 is the integrated region 20a described above.

It is possible to realize such a structure by extrusion-molding the first protective layer 20 and the sheath 52 with the wrapping tape 30 and the reinforcing member 51 longitudinally attached. More specifically, the wrapping tape 30 having a width (dimension in the circumferential direction) smaller than an outer circumference (dimension of the outer circumferential surface 20s in the circumferential direction) of the first protective layer 20 is prepared. When extrusion molding is performed using the wrapping tape 30, the heat-melted first protective layer 20 is fused and fixed to the reinforcing member 51 of the second protective layer 50 in the portion (integrated region 20a) in which the wrapping tape 30 is not present. On the other hand, in the portion (non-integrated region 20b) in which the wrapping tape 30 is present, contact and fusion between the first protective layer 20 and the reinforcing member 51 is suppressed. This is because a melting point and a softening point of the wrapping tape 30 are sufficiently higher than a temperature of the sheath 52 during the extrusion molding, and adhesiveness (surface energy) of a surface of the wrapping tape 30 is sufficiently low. Note that, in order to more reliably fuse and fix the first protective layer 20 and the reinforcing member 51 in the integrated region 20a, a resin layer may be provided on an inner circumferential surface of the reinforcing member 51. Also, in order to more reliably fuse and fix the first protective layer 20 and the reinforcing member 51 in the integrated region 20a, a thickness (dimension in the radial direction) of the wrapping tape 30 and a curvature of the outer circumferential surface 20s of the first protective layer 20 may be designed as appropriate.

Note that, even if the width of the wrapping tape 30 is equal to or larger than the outer circumference of the first protective layer 20, it is possible to obtain the same effect as described above by extrusion molding the pressure-wrapping tape 30 in a state in which it is wrinkled (pressed and compressed) or folded in the circumferential direction. That is, it is possible to fuse and fix the first protective layer 20 to the reinforcing member 51 in the integrated region 20a. In this case, the wrapping tape 30 may be wrinkled or folded over the entirety (entire length) of the optical fiber cable 1 in the longitudinal direction. Alternatively, the wrapping tape 30 may be wrinkled or folded intermittently in the longitudinal direction.

The rip cords 40 according to the present embodiment are disposed between the wrapping tape 30 and the reinforcing member 51 in the radial direction. The pair of rip cords 40 according to the present embodiment are disposed so that the core 10 is positioned between them in the radial direction. The rip cords 40 are members used to tear the sheath 52. As a material of the rip cord 40, for example, it is possible to use a synthetic fiber (polyester or the like) thread, a columnar rod made of polypropylene (PP) or nylon, or the like.

The four tension members 60 according to the present embodiment are embedded in the sheath 52 of the second protective layer 50. Each of the tension members 60 extends linearly in the longitudinal direction. When a tension in the longitudinal direction is applied to the optical fiber cable 1, the tension member 60 has a role of receiving the tension to protect the optical fiber 11. Also, the tension member 60 also has a role of suppressing contraction of the sheath 52 when a temperature decreases. As a material of the tension member 60, for example, it is possible to use metal wires (such as steel wires), materials made of bundled metal wires, glass fibers, materials made of bundled glass fibers, or the like. Alternatively, a fiber reinforced plastic (FRP) or the like may be used for the tension member 60. The four tension members 60 according to the present embodiment are disposed so that the core 10 is positioned between them in the radial direction. More specifically, the four tension members 60 according to the present embodiment form two groups, G1 and G2. Each of the groups G1 and G2 includes two tension members 60. Also, the two groups G1 and G2 are disposed so that the core 10 is positioned between them in the radial direction. Note that, the number of tension members 60 may be three or less or five or more. Also, the tension members 60 may form three or more groups. The number of tension members 60 included in each of the groups may be changed as appropriate. Alternatively, the tension members 60 may not form a group.

In the illustrated example, the tension member 60 is not embedded in the first protective layer 20. However, a configuration in which the tension member 60 is embedded in the first protective layer 20 and not embedded in the second protective layer 50 may also be employed. That is, in the present embodiment, the tension member 60 is embedded in only one of the first protective layer 20 and the second protective layer 50.

Next, an operation of the optical fiber cable 1 configured as described above will be described.

Conventionally, an optical fiber cable having an inner sheath and an outer sheath is known. Generally, as a temperature of the optical fiber cable decreases, the inner sheath and the outer sheath contract in a longitudinal direction. Here, for example, if a tension member is embedded only in the outer sheath of the inner sheath and the outer sheath, contraction of the outer sheath is suppressed by the tension member while contraction of the inner sheath is not suppressed by the tension member. Thereby, there is a likelihood that an amount of contraction will be different between the inner sheath and the outer sheath. If the amount of contraction differs between the inner sheath and the outer sheath, residual stress may occur inside the optical fiber cable, resulting in an increase in transmission loss.

In contrast, in the optical fiber cable 1 according to the present embodiment, the first protective layer 20 and the second protective layer 50 are fused and fixed in the integrated region 20a. Thereby, the first protective layer 20 and the second protective layer 50 contracting independently when a temperature decreases is suppressed. Therefore, it is possible to reduce a difference between an amount of contraction of the first protective layer 20 and an amount of contraction of the second protective layer 50, and it is possible to suppress residual stress inside the optical fiber cable 1. That is, it is possible to suppress transmission loss of the optical fiber cable 1.

Also, in the optical fiber cable 1 according to the present embodiment, the non-integrated region 20b is provided on the outer circumferential surface 20s of the first protective layer 20. That is, the integrated region 20a does not extend over the entirety (entire circumference) of the outer circumferential surface 20s of the first protective layer 20. With this configuration, stripping work, in which the second protective layer 50 is pulled out from the optical fiber cable 1 while leaving the first protective layer 20 and the core 10 in place, becomes easier to perform compared to a case in which, for example, the entire outer circumferential surface 20s of the first protective layer 20 serves as the integrated region 20a.

As described above, the optical fiber cable 1 according to the present embodiment includes the core 10 including the optical fibers 11, the first protective layer 20 covering the optical fibers 11, and the second protective layer 50 covering the first protective layer 20, and the integrated region 20a fixed to the second protective layer 50 and the non-integrated region 20b not fixed to the second protective layer 50 are provided on the outer circumferential surface 20s of the first protective layer 20.

With this configuration, it is possible to reduce a difference between an amount of contraction of the first protective layer 20 and an amount of contraction of the second protective layer 50 when a temperature decreases, and it is possible to suppress transmission loss of the optical fiber cable 1. Also, compared to a case in which, for example, the entire outer circumferential surface 20s of the first protective layer 20 serves as the integrated region 20a, it becomes easier to perform the stripping work of the optical fiber cable 1. That is, it is possible to achieve both suppression of transmission loss and improvement in workability of stripping work.

Also, the second protective layer 50 includes the reinforcing member 51 facing the outer circumferential surface 20s of the first protective layer 20, and the sheath 52 covering the reinforcing member 51 and is fixed to the reinforcing member 51, and the integrated region 20a is fixed to the reinforcing member 51. With this configuration, it is possible to protect the optical fibers 11 more firmly using the reinforcing member 51.

Also, the integrated region 20a is fused and fixed to the second protective layer 50. With this configuration, it is possible to easily fix the integrated region 20a to the second protective layer 50 by, for example, extrusion molding or the like.

Also, the optical fiber cable 1 further includes the tension member 60 embedded in only one of the first protective layer 20 and the second protective layer 50. With this configuration, it is possible to make an outer diameter of the optical fiber cable 1 small compared to a case in which, for example, the tension member 60 is embedded in both the first protective layer 20 and the second protective layer 50. Also, since the integrated region 20a is provided on the outer circumferential surface 20s of the first protective layer 20, even if the tension member 60 is embedded in only one of the protective layers 20 and 50, it is possible to reduce a difference in an amount of contraction between the protective layers 20 and 50 when a temperature decreases.

Also, the optical fiber cable 1 further includes a wrapping tape 30 positioned between the first protective layer 20 and the second protective layer 50 and covering a part of the first protective layer 20, and a portion of the outer circumferential surface 20s of the first protective layer 20 covered with the wrapping tape 30 is the non-integrated region 20b. With this configuration, it is possible to easily provide the integrated region 20a and the non-integrated region 20b on the outer circumferential surface 20s of the first protective layer 20 by, for example, extrusion-molding the first protective layer 20 and the second protective layer 50 with the wrapping tape 30 longitudinally attached.

Also, the wrapping tape 30 has a C shape in a cross section perpendicular to the central axis O of the core 10. With this configuration, it is possible to easily provide the integrated region 20a and the non-integrated region 20b on the outer circumferential surface 20s of the first protective layer 20.

Also, the wrapping tape 30 has water absorption properties. With this configuration, it is possible to suppress water running inside the optical fiber cable 1.

### (Second embodiment)

Next, a second embodiment will be described, but a basic configuration is the same as that of the first embodiment. Therefore, components which are the same are denoted by the same reference signs, description thereof will be omitted, and only different points will be described.

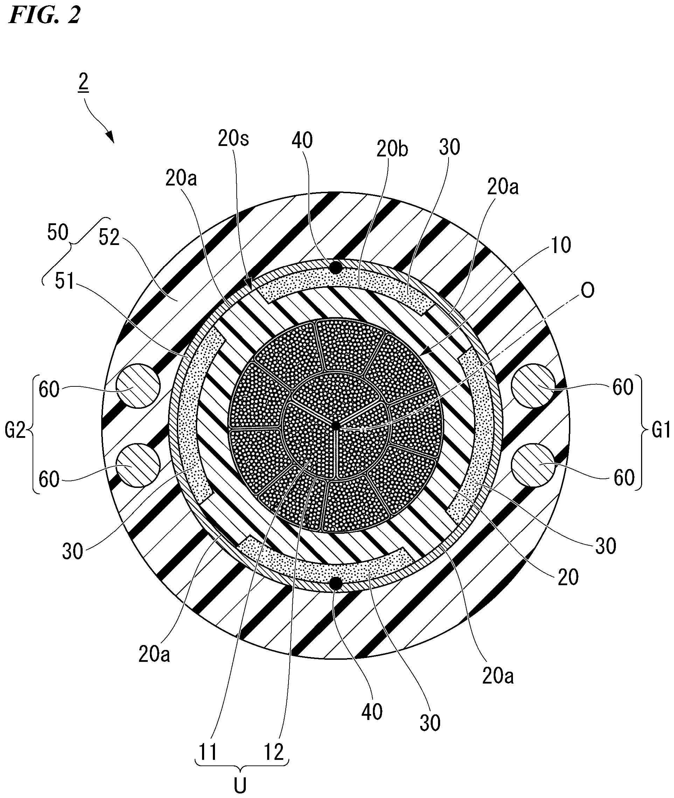

As illustrated in FIG. 2, an optical fiber cable 2 according to the present embodiment includes a plurality of wrapping tapes 30 disposed at intervals in a circumferential direction. Thereby, a plurality of integrated regions 20a and a plurality of non-integrated regions 20b are provided on an outer circumferential surface 20s of a first protective layer 20. The plurality of integrated regions 20a are disposed at intervals in the circumferential direction. The plurality of non-integrated regions 20b are disposed at intervals in the circumferential direction. It is possible to realize such a structure by, for example, extrusion-molding the first protective layer 20 and a sheath 52 with a reinforcing member 51 and the plurality of wrapping tapes 30 longitudinally attached. In this case, a width of each of the wrapping tapes 30 may be adjusted according to the number and size of the integrated regions 20a and non-integrated regions 20b to be formed. Also, as described in the first embodiment, the wrapping tape 30 may be wrinkled or folded in the circumferential direction.

As described above, also in the optical fiber cable 2 according to the present embodiment, the integrated region 20a and the non-integrated region 20b are provided on the outer circumferential surface 20s of the first protective layer 20 similarly to the optical fiber cable 1 according to the first embodiment. Therefore, it is possible to achieve both suppression of transmission loss and improvement in workability of stripping work.

Also, the plurality of wrapping tapes 30 (non-integrated regions 20b) are disposed at intervals in the circumferential direction. Therefore, even if a width of each of the wrapping tapes 30 (non-integrated region 20b) is made small, it is possible for the wrapping tape 30 to easily absorb water from the entirety of the optical fiber cable 2. Therefore, it becomes easier to suppress water running inside the optical fiber cable 2.

### (Third embodiment)

Next, a third embodiment will be described, but a basic configuration is the same as that of the first embodiment. Therefore, components which are the same are denoted by the same reference signs, description thereof will be omitted, and only different points will be described.

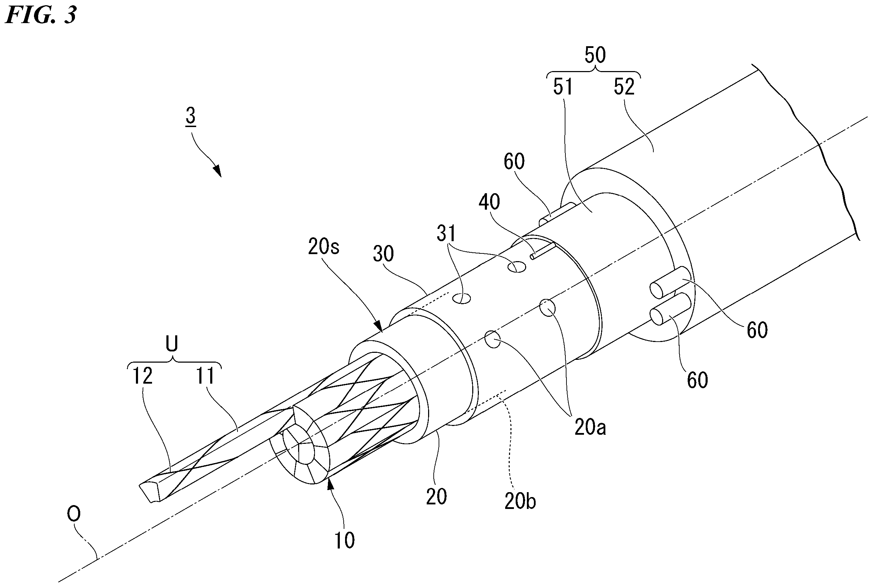

As illustrated in FIG. 3, in an optical fiber cable 3 according to the present embodiment, there is a cross section in which a wrapping tape 30 extends throughout in a circumferential direction (entire circumference) of a first protective layer 20. In other words, there is a cross section in which an integrated region 20a is not present on an outer circumferential surface 20s of the first protective layer 20. Also, a hole 31 penetrating the wrapping tape 30 in a radial direction is formed in the wrapping tape 30. In the illustrated example, the wrapping tape 30 includes a plurality of holes 31 formed to be disposed intermittently in a longitudinal direction and the circumferential direction. However, the number and positions of the holes 31 may be changed as appropriate. In the optical fiber cable 3 according to the present embodiment, a portion of the outer circumferential surface 20s of the first protective layer 20 overlapping the hole 31 in the radial direction is the integrated region 20a, and a portion thereof not overlapping the hole 31 is a non-integrated region 20b.

As described above, also in the optical fiber cable 3 according to the present embodiment, the integrated region 20a and the non-integrated region 20b are provided on the outer circumferential surface 20s of the first protective layer 20 similarly to the optical fiber cable 1 according to the first embodiment. Therefore, it is possible to achieve both suppression of transmission loss and improvement in workability of stripping work.

Also, the hole 31 penetrating the wrapping tape 30 in the radial direction is formed in the wrapping tape 30. With this configuration, it is possible to easily provide the integrated region 20a and the non-integrated region 20b on the outer circumferential surface 20s of the first protective layer 20.

### [Example]

Hereinafter, the above-described embodiments will be described using specific examples. More specifically, a preferable range of a ratio r of the integrated region 20a to the outer circumferential surface 20s of the first protective layer 20 will be described. Note that, the present invention is not limited to the following examples.

### (Comparative example)

In optical fiber cables according to comparative examples 1 and 2, the core 10 included 12 optical fiber units U. Each of the optical fiber units U included six intermittently-fixed optical fiber ribbons. Each of the intermittently-fixed optical fiber ribbons included 12 optical fibers 11. That is, the number of optical fibers 11 included in the core 10 was 864 in total. In the optical fiber cable according to the comparative example, the first protective layer 20 was completely covered with the wrapping tape 30. In other words, the ratio r of the integrated region 20a to the outer circumferential surface 20s of the first protective layer 20 was 0%. In the optical fiber cable according to comparative example 2, the outer circumferential surface 20s of the first protective layer 20 was not covered with the wrapping tape 30. In other words, the ratio r of the integrated region 20a to the outer circumferential surface 20s of the first protective layer 20 was 100%.

### (Example)

An optical fiber cable according to example 1 was the optical fiber cable 1 according to the first embodiment. An optical fiber cable according to example 2 was the optical fiber cable 2 according to the second embodiment. An optical fiber cable according to example 3 was the optical fiber cable 3 according to the third embodiment. Each of the optical fiber cables according to examples 1 to 3 had a core that could be regarded as the same as the core of the optical fiber cable according to the comparative example. The only difference between examples 1 to 3 and comparative example was disposition of the wrapping tape 30, that is, disposition of the integrated region 20a and the non-integrated region 20b. In example 1, a plurality of optical fiber cables with different ratios r of the integrated region 20a to the outer circumferential surface 20s of the first protective layer 20 were prepared by changing a width of the wrapping tape 30. In example 2, a plurality of optical fiber cables with different ratios r were prepared by changing a width of the wrapping tape 30 and the number of wrapping tapes 30. In example 3, a plurality of optical fiber cables with different ratios r were prepared by changing the size and number of the holes 31 formed in the wrapping tape 30.

Note that, the ratio r is defined, in more detail, as a ratio of an area of the integrated region 20a to a surface area of the outer circumferential surface 20s of the first protective layer 20. Here, it is also possible to define the ratio r in example 1 and example 2 as a ratio of a length (dimension in the circumferential direction) of the integrated region 20a to a length (dimension in the circumferential direction) of the outer circumference of the first protective layer 20 in a certain cross section.

For the optical fiber cables according to examples 1 to 3 and comparative examples 1 and 2, a temperature cycle test and a confirmation of stripping workability (workability of stripping work) were performed. The results are shown in Tables 1 to 3.

Note that, the temperature cycle test was conducted in accordance with ICEA S-87-640-2016, item 7.24. Specifically, a case in which an increase in loss in -40°C /+70°C×2 cycles (measured wavelength 1550 nm) was 0.15 dB/km or less was estimated to be satisfactory (OK), and a case in which the increase in loss exceeded 0.15 dB/km was estimated to be poor (NG).

In the confirmation of the stripping workability, a case in which the stripping work was difficult was categorized as C, a case in which the stripping work was satisfactorily performed was categorized as B, and a case in which the stripping work was more satisfactorily performed was categorized as A.

**[Table 1]**

| | Comparative example 2 | Example 1 | | | | | | Comparative example 1 |
|---|---|---|---|---|---|---|---|---|
| Ratio r [%] | 100% | 80% | 60% | 50% | 30% | 10% | 5% | 0% |
| Temperature cycle test | OK | OK | OK | OK | OK | OK | NG | NG |
| Stripping workability | C | B | B | A | A | A | A | A |

**[Table 2]**

| | Comparative example 2 | Example 2 | | | | | | | | Comparative example 2 |
|---|---|---|---|---|---|---|---|---|---|---|
| Number of wrapping tapes | 0 | 4 | 2 | 4 | 2 | 4 | 2 | 4 | 2 | 1 |
| Ratio r [%] | 100% | 60% | 60% | 50% | 50% | 10% | 10% | 5% | 5% | 0% |
| Temperature cycle test | OK | OK | OK | OK | OK | OK | NG | NG | NG | NG |
| Stripping workability | C | B | B | A | A | A | A | A | A | A |

**[Table 3]**

| | Comparative example 2 | Example 3 | | | | | | Comparative example 1 |
|---|---|---|---|---|---|---|---|---|
| Ratio r [%] | 100% | 80% | 60% | 50% | 30% | 10% | 5% | 0% |
| Temperature cycle test | OK | OK | OK | OK | OK | OK | NG | NG |
| Stripping workability | C | B | B | A | A | A | A | A |

As shown in Tables 1 to 3, if the ratio r of the integrated region 20a was 0% to 5%, the result of the temperature cycle test was NG. This is considered to be because amounts of contraction of the protective layers 20 and 50 were different from each other due to an insufficient fixing strength between the first protective layer 20 and the second protective layer 50, and residual stress was generated inside the optical fiber cable. On the other hand, if the ratio r of the integrated region 20a was 10% to 100%, the result of the temperature cycle test was OK.

From the results described above, the ratio r of the integrated region 20a to the outer circumferential surface 20s of the first protective layer 20 is preferably 10% or more. Thereby, it is possible to effectively suppress transmission loss of the optical fiber cable.

Also, as shown in Tables 1 to 3, if the ratio r of the integrated region 20a was 100%, the confirmation result of the stripping workability was C. This is considered to be because the first protective layer 20 and the second protective layer 50 were completely integrated, making it difficult to pull out only the second protective layer 50 from the optical fiber cable. On the other hand, if the ratio r of the integrated region 20a was 60% to 80%, the confirmation result of the stripping workability was B, and if the ratio r was 0% to 50%, the confirmation result was A.

From the results described above, the ratio r of the integrated region 20a to the outer circumferential surface 20s of the first protective layer 20 is preferably 80% or less, and more preferably 50% or less. Thereby, it is possible to reliably secure the stripping workability.

Also, the inventors of the present application further conducted a waterproof test on the optical fiber cables according to examples 1 to 3. The waterproof test was conducted in accordance with IEC 60794-1-22 F5C. In the optical fiber cables according to examples 1 and 3, a case in which the ratio r of the integrated region 20a to the outer circumferential surface 20s of the first protective layer 20 was 40% or less was considered to have passed. In the optical fiber cable according to example 2, a case in which the ratio r was 60% or less considered to have passed. The factor that led to different results between examples 1 and 3 and example 2 is thought to be a difference in disposition of the wrapping tape 30 (non-integrated region 20b). That is, in example 2, the plurality of wrapping tapes 30 are disposed at intervals in the circumferential direction. Therefore, even if the width of each wrapping tape 30 is small and the ratio r is large, it is thought that the wrapping tapes 30 easily absorbs water from the entire optical fiber cable 2.

From the results described above, the ratio r of the integrated region 20a to the outer circumferential surface 20s of the first protective layer 20 is preferably 40% or less. Thereby, it is possible to suppress water running inside the optical fiber cable. However, if the plurality of non-integrated regions 20b disposed at intervals in the circumferential direction are provided on the outer circumferential surface 20s of the first protective layer 20, it is possible to effectively suppress the water running even if the ratio r is 60% or less.

Note that, the technical scope of the present invention is not limited to the above-described embodiments, and various modifications may be made in a range not departing from the spirit of the present invention.

For example, in the embodiments described above, the integrated region 20a of the first protective layer 20 and the second protective layer 50 are fixed by fusion, but a manner of the fixing is not limited to fusion. For example, the first protective layer 20 and the second protective layer 50 may be fixed with an adhesive.

Also, the integrated region 20a and the second protective layer 50 do not necessarily have to be fixed, and the integrated region 20a may be in pressure contact with the second protective layer 50. In this case, a frictional force acts between the integrated region 20a and the second protective layer 50. When only one protective layer of the protective layers 20 and 50 tries to contract, the frictional force acts to prevent only that protective layer from contracting. Therefore, even if the integrated region 20a is configured to be in pressure contact with the second protective layer 50, similarly to the above-described embodiments, it is possible to reduce a difference in the amount of contraction between the protective layers 20 and 50, and it is possible to suppress transmission loss in the optical fiber cables 1 to 3. Note that, the optical fiber cables 1 to 3 may include, for example, a compressing member that compresses (presses, crushes) the second protective layer 50 radially inward. Alternatively, the first protective layer 20 may be compressed radially inward by making an inner diameter of the second protective layer 50 smaller than an outer diameter of the first protective layer 20. According to these configurations, it is possible to bring the integrated region 20a into pressure contact with the second protective layer 50 more reliably. Also, a frictional coefficient between the integrated region 20a and the second protective layer 50 may be increased by subjecting the integrated region 20a to a surface treatment or subjecting the second protective layer 50 to a surface treatment. According to this configuration, it is possible to increase the frictional force acting between the integrated region 20a and the second protective layer 50.

Also, the second protective layer 50 may not include the reinforcing member 51. In this case, the integrated region 20a may be fixed to or in pressure contact with the sheath 52.

Also, the wrapping tape 30 may not have water absorption properties.

Also, the optical fiber cables 1 to 3 may not include the tension member 60. Note that, even with conventional optical fiber cables that do not include a tension member, if coefficients of linear expansion of a material constituting the first protective layer and a material constituting the second protective layer are different, a problem arises in that an amount of contraction differs between the two protective layers. When the configuration according to the above-described embodiments in which the integrated region 20a is present on the outer circumferential surface 20s of the first protective layer 20, it is possible to solve the problem even in the optical fiber cables 1 to 3 that do not include the tension member 60.

In addition, the components in the above-described embodiments may be appropriately replaced with well-known components within a range not departing from the spirit of the present invention, and the above-described embodiments and modified examples may be appropriately combined.

For example, the first embodiment and the third embodiment may be combined. That is, a configuration in which the holes 31 are formed in the wrapping tape 30 having a C shape in a cross-sectional view may be employed. Similarly, the second embodiment and the third embodiment may be combined. That is, a configuration in which the holes 31 are formed in the plurality of wrapping tapes 30 may be employed. In this case, the holes 31 may be formed in all the wrapping tapes 30. Alternatively, the wrapping tape 30 in which the holes 31 are not formed may be present.

### [Reference Signs List]

1 to 3 Optical fiber cable
10 Core
11 Optical fiber
20 First protective layer
20s Outer circumferential surface
20a Integrated region
20b Non-integrated region
30 Wrapping tape
31 Hole
50 Second protective layer
51 Reinforcing member
52 Sheath
60 Tension member

## Claims

1. An optical fiber cable comprising:
a core including an optical fiber;
a first protective layer covering the core; and
a second protective layer covering the first protective layer, wherein
at least one integrated region fixed to or in pressure contact with the second protective layer and at least one non-integrated region not fixed to and not in pressure contact with the second protective layer are provided on an outer circumferential surface of the first protective layer.

2. The optical fiber cable according to claim 1, wherein
the second protective layer includes a reinforcing member facing the outer circumferential surface of the first protective layer, and a sheath covering the reinforcing member and fixed to the reinforcing member, and
the integrated region is fixed to or in pressure contact with the reinforcing member.

3. The optical fiber cable according to claim 1 or 2, wherein the integrated region is fused and fixed to the second protective layer.

4. The optical fiber cable according to any one of claims 1 to 3, further comprising a tension member embedded in only one of the first protective layer and the second protective layer.

5. The optical fiber cable according to any one of claims 1 to 4, wherein a ratio of the integrated region to the outer circumferential surface of the first protective layer is 10% or more.

6. The optical fiber cable according to any one of claims 1 to 5, wherein the ratio of the integrated region to the outer circumferential surface of the first protective layer is 50% or less.

7. The optical fiber cable according to any one of claims 1 to 6, further comprising at least one wrapping tape positioned between the first protective layer and the second protective layer and covering a part of the first protective layer, wherein
a portion of the outer circumferential surface of the first protective layer covered with the wrapping tape is the non-integrated region.

8. The optical fiber cable according to claim 7, wherein the wrapping tape has a C shape in a cross section perpendicular to a central axis of the core.

9. The optical fiber cable according to claim 7 or 8, wherein a hole penetrating the wrapping tape in a radial direction is formed in the wrapping tape.

10. The optical fiber cable according to any one of claims 7 to 9, wherein the wrapping tape has water absorption properties.

11. The optical fiber cable according to claim 10, wherein the ratio of the integrated region to the outer circumferential surface of the first protective layer is 40% or less.

12. The optical fiber cable according to claim 10, wherein
a plurality of the non-integrated regions disposed at intervals in a circumferential direction are provided on the outer circumferential surface of the first protective layer, and
the ratio of the integrated region to the outer circumferential surface of the first protective layer is 60% or less.
